(19) Europäisches Patentamt
European Patent Office
Office européen des brevets

(11) **EP 3 681 766 B1**

(12) **EUROPÄISCHE PATENTSCHRIFT**

(45) Veröffentlichungstag und Bekanntmachung des Hinweises auf die Patenterteilung:
**08.12.2021** **Patentblatt 2021/49**

(21) Anmeldenummer: **18752737.9**

(22) Anmeldetag: **07.08.2018**

(51) Int Cl.:
**B60R 21/01** *(2006.01)* **B60W 40/10** *(2012.01)*

(86) Internationale Anmeldenummer:
**PCT/EP2018/071416**

(87) Internationale Veröffentlichungsnummer:
**WO 2019/052745 (21.03.2019 Gazette 2019/12)**

(54) **VERFAHREN ZUM ERMITTELN EINES DEAKTIVIERTEN BETRIEBSZUSTANDES EINES KRAFTFAHRZEUGS**

METHOD FOR DETERMINING A DEACTIVATED OPERATING STATE OF A MOTOR VEHICLE

PROCÉDÉ POUR DÉTERMINER UN ÉTAT DE FONCTIONNEMENT DÉSACTIVÉ D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2017 DE 102017216022**

(43) Veröffentlichungstag der Anmeldung:
**22.07.2020 Patentblatt 2020/30**

(73) Patentinhaber: **Robert Bosch GmbH 70442 Stuttgart (DE)**

(72) Erfinder:
• **VOGEL, Gunther 71254 Ditzingen (DE)**
• **LUDWIG, Denis 70378 Steinhaldenfeld (DE)**

(56) Entgegenhaltungen:
**EP-A2- 1 236 627** **EP-B1- 1 274 609**
**EP-B1- 2 625 057** **DE-A1-102011 004 561**
**DE-A1-102012 214 337** **DE-A1-102015 109 817**
**DE-B3-102007 023 122**

**Beschreibung**

Stand der Technik

Moderne Kraftfahrzeuge weisen regelmäßig pyrotechnische Systeme wie beispielsweise Airbags auf. Insbesondere bei der Verschrottung eines Kraftfahrzeugs können derartige pyrotechnische Systeme eine Gefahr darstellen. Daher werden beispielsweise Airbags bei der Verschrottung eines Kraftfahrzeugs regelmäßig kontrolliert gezündet. Das ist auch als "end-of-life-Auslösung" bekannt.

Die ISO 26021 definiert ein Verfahren zum fahrzeuginternen Auslösen von pyrotechnischen Komponenten, wie beispielsweise Airbags. Damit soll ein herstellerübergreifender Mechanismus zur sicheren und günstigen Deaktivierung von pyrotechnischen Komponenten beim Fahrzeugrecycling geschaffen werden.

Der Standard der ISO 26021 bietet die Möglichkeit, den Betriebszustand des Kraftfahrzeugs vor der "end-of-life-Auslösung" zu überprüfen. Dabei wird beispielsweise ein einfaches Geschwindigkeitssignal ausgelesen, um sicherzustellen, dass sich das Kraftfahrzeug in Ruhe befindet, wenn die Airbags kontrolliert gezündet werden. Das Geschwindigkeitssignal ist dabei beispielsweise ein ansonsten für das ABS verwendetes Signal, welches über einen Signal-Bus verfügbar ist.

Aus der EP 1 274 609 B1 ist ein Verfahren zum absichtlichen Auslösen der Zündung von mindestens einem pyrotechnischen Bauteil bekannt, welches ein Kraftfahrzeug ausstattet, wobei die Zündung über mindestens ein Ausgangssignal ausgelöst werden kann.

Offenbarung der Erfindung

Im Anspruch 1 wird ein besonders vorteilhaftes Verfahren zum Ermitteln eines deaktivierten Betriebszustandes eines Kraftfahrzeugs vorgestellt. Die abhängigen Ansprüche geben besonders vorteilhafte Weiterbildungen des Verfahrens an.

Das beschriebene Verfahren kann grundsätzlich auf jeden Betriebszustand des Kraftfahrzeugs angewendet werden. So kann beispielsweise eine Einstellung einer elektronischen Komponente des Kraftfahrzeugs (wie beispielsweise ein Steuergerät, ein Radio, oder ein Fensterheber) ein Betriebszustand sein. Auch kommen beispielsweise eine Motordrehzahl, ein Kraftstoffverbrauch oder eine Fahrgeschwindigkeit als Betriebszustände in Betracht. Ein Betriebszustand kann beispielsweise dann als ein deaktivierter Betriebszustand angesehen werden, wenn ein den entsprechenden Betriebszustand charakterisierender Betriebsparameter in einem entsprechend vorgegebenen Wertebereich liegt. Insbesondere kann ein solcher Betriebsparameter bei einem deaktivierten Betriebszustand besonders klein sein. Liegt beispielsweise die Motordrehzahl unterhalb einer für Leerlauf vorgegebenen Drehzahl, kann aus der Motordrehzahl geschlossen werden, dass das Kraftfahrzeug ausgeschaltet ist. Der deaktivierte Betriebszustand ist in dem Fall dadurch ausgezeichnet, dass der Motor ausgeschaltet ist.

Ein deaktivierter Betriebszustand kann insbesondere besonders sicher sein. Das ist insbesondere der Fall, wenn der Motor oder eine elektronische Komponente ausgeschaltet ist. Mit dem beschriebenen Verfahren kann insbesondere besonders zuverlässig erkannt werden, ob ein deaktivierter Betriebszustand vorliegt.

Dazu wird in Schritt a) des beschriebenen Verfahrens mindestens ein Signal empfangen, welches einen Betriebsparameter des Kraftfahrzeugs umfasst.

In Schritt a) kann ein Signal empfangen werden. Es können allerdings auch mehrere Signale in Schritt a) empfangen und anschließend in den folgenden Schritten b), c) und gegebenenfalls d) weiter verarbeitet werden. Wenn im Folgenden von "einem Signal" bzw. "dem Signal" die Rede ist, dann ist immer auch der Fall umfasst, dass es sich hier um mehrere Signale handelt, die gemeinsam genutzt werden, um in Schritt b) mit vorgebbaren Schwellen verglichen zu werden und um in Schritt c) einen deaktivierten Betriebszustand zu erkennen.

Das Signal wird vorzugsweise von einer Benutzerschnittstelle empfangen, die für die Durchführung des beschriebenen Verfahrens bestimmt und eingerichtet ist. Bei der Benutzerschnittstelle kann es sich beispielsweise um einen Computer wie einen Laptop handeln, der beispielsweise über einen Diagnosestecker und/oder über eine Funkverbindung an ein Netzwerk des Kraftfahrzeugs angebunden ist. Die Benutzerschnittstelle kann aber auch (dauerhaft) innerhalb des Kraftfahrzeugs vorgesehen sein. So kann es sich bei der Benutzerschnittstelle beispielsweise auch um einen vom Fahrer bedienbaren Bordcomputer des Kraftfahrzeugs handeln. Auch kann das Verfahren in einer pyrotechnischen Steuereinheit und damit im Kraftfahrzeug implementiert sein.

Das Signal kann beispielsweise von einem Steuergerät ausgegeben werden, das an einen Sensor zur Messung des Betriebsparameters angebunden ist. Auch kann das Signal unmittelbar von einem Steuergerät als Ergebnis einer Berechnung ausgegeben werden. Insbesondere kann das Signal auf einem Signal-Bus des Kraftfahrzeugs verfügbar sein.

In Schritt b) des beschriebenen Verfahrens wird ein Zeitpunkt ermittelt, an dem der Betriebsparameter aus dem gemäß Schritt a) empfangenen Signal zuletzt eine vorgebbare Schwelle überschritten hat.

Die vorgebbare Schwelle kann insbesondere in der Benutzerschnittstelle hinterlegt sein. Dabei kann die Schwelle als ein zeitlich konstanter Wert vorgegeben sein. Auch kann die Schwelle als eine Abhängigkeit von einem oder mehreren Parametern vorgegeben sein, so dass die Schwelle zeitabhängig aus dem Parameter bzw. aus den Parametern berechnet werden kann.

Unter Überschreiten der vorgebbaren Schwelle ist zu verstehen, dass ein zuvor größerer Wert unter die vorgebbare Schwelle fällt oder dass ein zuvor kleinerer Wert die vorgebbare Schwelle übersteigt. Dabei kann vorgegeben sein, ob ein Überschreiten von unterhalb der vorgebbaren Schwelle nach oberhalb der vorgebbaren Schwelle und/oder ein Überschreiten von oberhalb der vorgebbaren Schwelle nach unterhalb der vorgebbaren Schwelle in Schritt b) berücksichtigt werden soll. So kann beispielsweise vorgegeben sein, dass in Schritt b) der Zeitpunkt erfasst wird, zu dem ein Betriebsparameter zuletzt unter die vorgebbare Schwelle gefallen ist, ohne anschließend wieder über die Schwelle gestiegen zu sein. Mithin gibt der in Schritt b) ermittelte Zeitpunkt an, für wie lange der Betriebsparameter nicht mehr größer als die vorgebbare Schwelle war.

Grundsätzlich könnte unmittelbar aufgrund eines momentanen Wertes des Betriebsparameters entschieden werden, ob der deaktivierte Betriebszustand vorliegt. Das ist aber fehleranfällig. Ist ein momentaner Wert des Betriebsparameters falsch, kann auch falsch entschieden werden, ob der deaktivierte Betriebszustand vorliegt.

Diese Problematik ist insbesondere vor dem Hintergrund immer stärkerer Digitalisierung und Vernetzung von Kraftfahrzeugen von Bedeutung. So hat sich gezeigt, dass Cyberattacken auf Kraftfahrzeuge möglich sind. Es kann davon ausgegangen werden, dass die Zahl und die Qualität der Cyberattacken auf Kraftfahrzeuge in Zukunft zunehmen werden. Das ist insbesondere bei Kraftfahrzeugen mit Internetverbindung der Fall (insbesondere über "vehicle-tovehicle (V2V)" oder "vehicle-to-infrastructure (V2I)"-Kommunikation). Es ist Angreifern bereits gelungen, Nachrichten über Funkverbindungen in das Fahrzeugnetzwerk (insbesondere in den Signal-Bus) einzuleiten, ohne dass ein physischer Zugriff auf das Kraftfahrzeug nötig gewesen wäre.

Mit dem beschriebenen Verfahren kann die Erkennung des deaktivierten Betriebszustandes insbesondere vor dem Hintergrund möglicher Cyberattacken besonders zuverlässig erfolgen. Das liegt daran, dass das beschriebene Verfahren nicht bloß auf einem momentanen Wert des Betriebsparameters beruht. Stattdessen wird in Schritt b) auch berücksichtigt, wie lange der Betriebsparameter die vorgebbare Schwelle nicht mehr überschritten hat.

Gelingt es beispielsweise einem Angreifer, durch eine Cyberattacke einzelne Werte des Betriebsparameters zu manipulieren, kann mit dem beschriebenen Verfahren dennoch korrekt erkannt werden, ob der deaktivierte Betriebszustand vorliegt. Das beschriebene Verfahren ist insbesondere dann gegen eine Cyberattacke robust, wenn die Manipulation nur kurzzeitig erfolgt.

In Schritt c) des beschriebenen Verfahrens wird der deaktivierte Betriebszustand in Abhängigkeit davon erkannt, ob der gemäß Schritt b) ermittelte Zeitpunkt um mehr als eine vorgegebene Zeitspanne zurückliegt.

Die vorgegebene Zeitspanne kann insbesondere in der Benutzerschnittstelle hinterlegt sein. Dabei kann die Zeitspanne als ein zeitlich konstanter Wert vorgegeben sein. Auch kann die Zeitspanne als eine Abhängigkeit von einem oder mehreren Parametern vorgegeben sein, so dass die Zeitspanne zeitabhängig aus dem Parameter bzw. aus den Parametern berechnet werden kann.

In Schritt c) kann insbesondere überprüft werden, ob der Betriebsparameter die vorgebbare Schwelle innerhalb der durch die vorgegebene Zeitspanne bestimmten vergangenen Zeit überschritten hat oder nicht. Die vorgegebene Zeitspanne erstreckt sich also von einem momentanen Zeitpunkt in die Vergangenheit. Wurde die vorgebbare Schwelle in der vorgegebenen Zeitspanne nicht überschritten, lag der Betriebsparameter während der gesamten vorgegebenen Zeitspanne auf der gleichen Seite der vorgebbaren Schwelle. Ist das der Fall, kann mit besonders großer Zuverlässigkeit erkannt werden, ob der deaktivierte Betriebszustand vorliegt oder nicht. Ist beispielsweise ein deaktivierter Betriebszustand durch einen besonders kleinen Wert eines Betriebsparameters charakterisiert, kann in Schritt c) auf Vorliegen des deaktivierten Betriebszustandes entschieden werden, wenn der Betriebsparameter zumindest während der gesamten vorgegebenen Zeitspanne unterhalb der vorgebbaren Schwelle lag. Andernfalls, d. h. wenn der Betriebsparameter innerhalb der vorgegebenen Zeitspanen auch nur kurzzeitig oberhalb der vorgebbaren Schwelle lag, kann entsprechend entschieden werden, dass der deaktivierte Betriebszustand nicht vorliegt.

Durch dieses Vorgehen kann insbesondere eine Manipulation durch eine Cyberattacke erschwert werden bzw. die Auswirkung einer Cyberattacke kann abgemildert werden. In dem beschriebenen Beispiel müsste ein Angreifer den Wert des Betriebsparameters während der gesamten vorgegebenen Zeitspanne auf Werte unterhalb der vorgebbaren Schwelle manipulieren, damit in Schritt c) die falsche Entscheidung getroffen wird. Das ist weit schwieriger als die Manipulation eines einzelnen Wertes. Lag ein Betriebsparameter beispielsweise tatsächlich während der gesamten vorgegebenen Zeitspanne oberhalb einer entsprechenden vorgebbaren Schwelle und erfolgte nur für einen Teil dieser Zeitspanne eine Manipulation auf einen Wert unterhalb der vorgebbaren Schwelle, so bleibt das beschriebene Verfahren davon unbeeinflusst.

In einer bevorzugten Ausführungsform des Verfahrens wird das Signal in Schritt a) zu einer Vielzahl von diskreten Empfangszeitpunkten empfangen, welche höchstens um eine maximale Empfangszeitspanne auseinander liegen, und wobei die in Schritt c) verwendete vorgegebene Zeitspanne zumindest größer als der maximale Empfangszeitpunkt ist.

Der Betriebsparameter kann insbesondere wiederholt (insbesondere periodisch) empfangen werden. Das ist insbesondere bei Parametern der Fall, die über einen Signal-Bus verfügbar sind. Diese werden regelmäßig mit einer bestimmten Taktfrequenz aktualisiert. Entsprechend der Taktung können die Betriebsparameter entsprechend zu den diskreten Empfangszeitpunkten empfangen werden. Die Empfangszeitspanne gibt dabei den zeitlichen Abstand zweier benachbarter Empfangszeitpunkte an. Die maximale Empfangszeitspanne ist der größte zwischen zwei benachbarten Empfangszeitpunkten liegende zeitliche Abstand. Wird ein Betriebsparameter periodisch empfangen, liegen alle Empfangszeitpunkte um die gleiche Empfangszeitspanne auseinander, die auch der maximalen Empfangszeitspanne entspricht.

Insbesondere bei derartigen, zu diskreten Empfangszeitpunkten empfangbaren Betriebsparametern ist das beschriebene Verfahren von Vorteil, weil eine Manipulation zu einem einzelnen der diskreten Empfangszeitpunkte unerheblich ist. Gelingt es also einem Angreifer bei einer Cyberattacke, den Wert eines Betriebsparameters zu einem der diskreten Empfangszeitpunkte zu manipulieren, hat dies noch keine Auswirkung auf die Entscheidung in Schritt c). Erst wenn der Angreifer den Betriebsparameter zu allen diskreten Empfangszeitpunkten innerhalb der vorgegebenen Zeitspanne manipuliert, hat dies eine Auswirkung auf die Entscheidung in Schritt c). Die Manipulation von Betriebsparametern zu mehr als einem der diskreten Empfangszeitpunkte ist aber deutlich schwieriger als die Manipulation an einem einzelnen Empfangszeitpunkt.

Je größer die vorgegebene Zeitspanne im Verhältnis zu der maximalen Empfangszeitspanne gewählt wird, umso mehr Werte müssen manipuliert werden, damit der Angriff eine Auswirkung hat. Entsprechend ist eine besonders große vorgegebene Zeitspanne bevorzugt.

In einer weiteren bevorzugten Ausführungsform des Verfahrens ist der Betriebsparameter eine Geschwindigkeit des Kraftfahrzeugs.

Über die Geschwindigkeit des Kraftfahrzeugs als dem Betriebsparameter kann insbesondere ein Stillstand des Kraftfahrzeugs erkannt werden.

Alternativ oder zusätzlich zu der Geschwindigkeit des Kraftfahrzeugs kann das beschriebene Verfahren aber auch insbesondere mit einem Betriebsparameter durchgeführt werden, der angibt, ob ein Motor des Kraftfahrzeugs eingeschaltet oder ausgeschaltet ist. Auch damit kann ein Stillstand des Kraftfahrzeugs erkannt werden.

Den Stillstand des Kraftfahrzeugs besonders zuverlässig erkennen zu können, kann insbesondere bei der "end-of-life-Auslösung" der Airbags von Vorteil sein. Das kann insbesondere in der weiteren bevorzugten Ausführungsform des Verfahrens ausgenutzt werden, in der das Verfahren weiterhin dazu eingerichtet ist, ein Ausgabesignal für mindestens ein Auslösesignal eines pyrotechnischen Elements des Kraftfahrzeugs auszugeben, wobei das Ausgabesignal einen ersten Wert umfasst, wenn ein deaktivierter Betriebszustand erkannt wurde, wobei das Ausgabesignal im Übrigen einen zweiten Wert umfasst, und wobei das Verfahren weiterhin den folgenden Verfahrensschritt umfasst:

d) Ausgeben des mindestens einen Auslösesignals für das entsprechende pyrotechnische Element des Kraftfahrzeugs, wenn in Schritt c) ein deaktivierter Betriebszustand erkannt wurde.

In dieser Ausführungsform kann das beschriebene Verfahren insbesondere dazu genutzt werden, das mindestens eine pyrotechnische Element auszulösen, insbesondere also um beispielsweise beim Fahrzeugrecycling die Airbags kontrolliert auszulösen ("end-of-life-Auslösung").

Bei dem pyrotechnischen Element kann es sich insbesondere um ein Airbag handeln.

Das Ausgabesignal kann insbesondere von der Benutzerschnittstelle ausgegeben und von einer pyrotechnischen Steuereinheit, insbesondere von einem Airbagsteuergerät, empfangen werden. Je nach Wert des Ausgabesignals kann dann das Auslösesignal zum Auslösen des entsprechenden pyrotechnischen Elements von der pyrotechnischen Steuereinheit ausgegeben werden. Vorzugsweise wird für jedes pyrotechnische Element ein jeweiliges Auslösesignal ausgegeben. Das Ausgabesignal wird hingegen vorzugsweise global ausgegeben. Das bedeutet, dass für alle pyrotechnischen Elemente das gleiche Ausgabesignal ausgegeben wird. Das Ausgabesignal kann insbesondere "wahr" als den ersten Wert und "falsch" als den zweiten Wert umfassen. Vor dem Ausgeben des Auslösesignals durch die pyrotechnische Steuereinheit kann von dieser überprüft werden, auf welchem Wert das Ausgabesignal ist. Vorzugsweise erfolgt die "end-of-life-Auslösung" nur, wenn das Ausgabesignal den Wert "wahr" umfasst. Eine andere Auslösung, insbesondere bedingt durch einen Unfall, kann hingegen insbesondere unabhängig von dem Ausgabesignal erfolgen. So kann insbesondere sichergestellt sein, dass die bestimmungsgemäße Auslösung eines Airbags bei einem Unfall nicht durch das beschriebene Verfahren verhindert wird.

Durch das beschriebene Verfahren kann in dieser Ausführungsform sichergestellt werden, dass das Kraftfahrzeug bei der "end-of-life-Auslösung" nicht in Fahrt ist. Würden die Airbags während einer normaler Fahrt (also nicht wie vorgesehen in einer Unfallsituation), beispielsweise durch eine Cyberattacke ausgelöst, könnte dies aufgrund erheblicher Ablenkung des Fahrers einen schweren Unfall verursachen. Lösen alle Airbags völlig unerwartet während der Fahrt aus, kann dies dazu führen, dass der Fahrer die Kontrolle über das Kraftfahrzeug verliert. Zudem können die Insassen eines Kraftfahrzeugs auch unmittelbar durch die "end-of-life-Auslösung" der Airbags gefährdet werden. Das ist insbesondere der Fall, wenn eine Funktion zum Schutz von Kindern (beispielsweise beim Beifahrerairbag) bei der "end-of-life- Auslösung" umgangen wird.

Würde bei der "end-of-life-Auslösung" von Airbags lediglich ein einfaches momentanes Geschwindigkeitssignal überprüft, könnte ein Angreifer einer Cyberattacke diese Überprüfung durch besonders einfache Manipulation umgehen. Angenommen, ein Angreifer ist in der Lage, Nachrichten in ein Fahrzeugnetzwerk einzuleiten und so insbesondere die Geschwindigkeitssignale zu manipulieren. Dann könnte der Angreifer durch Manipulation eines einzelnen Werts erreichen, dass das Kraftfahrzeug als stehend angesehen wird. Zwischen einem so manipulierten und einem "echten" Geschwindigkeitssignal kann nicht ohne weitere Maßnahmen unterschieden werden. Würde der Angreifer also unmittelbar vor einem von ihm eingeleiteten Signal zur "end-of-life-Auslösung" der Airbags einen einzelnen Wert des Geschwindigkeitssignals manipulieren, könnte er so auch bei voller Fahrt die Airbags missbräuchlich auslösen. Mit dem beschriebenen Verfahren ist das deutlich erschwert. In der vorliegenden Ausführungsform ist das beschriebene Verfahren somit insbesondere gegenüber Cyberattacken besonders robust.

Geschwindigkeitssignale werden üblicherweise periodisch über eine Kommunikations-Bus übertragen. Dabei wird im Folgenden die maximale Empfangszeitspanne zwischen zwei Geschwindigkeitssignalen (also die maximal erlaubte Periodendauer) mit $T_{vMax}$ bezeichnet. Leitet ein Angreifer einer Cyberattacke manipulierte Geschwindigkeitssignale als Fremdsignale über die vorgegebene Zeitspanne $T_W \geq T_{vMax}$ in das Fahrzeugnetzwerk ein, wird das Geschwindigkeitssignal an mindestens einem Empfangszeitpunkt manipuliert, so dass mindestens ein gültiges Geschwindigkeitssignal manipuliert wird. Ist dieses Signal oberhalb einer vorgebbaren Schwelle für Stillstand des Kraftfahrzeugs, die hier mit $v_s$ bezeichnet wird, wird das Kraftfahrzeug als in Bewegung angenommen. Damit kann eine Zuordnung $S: t \rightarrow$ {*falsch, wahr*} definiert werden, die angibt, ob das Kraftfahrzeug zu einem Zeitpunkt t als in Bewegung oder im Stillstand angenommen werden soll:

$$S(t) = \begin{cases} \text{falsch}; & \max\limits_{t-T_w > t' \geq t} v(t') \geq v_s \\ \text{wahr}; & \text{sonst} \end{cases}$$

$$\text{mit } v(t) = 0 \text{ für } t < 0.$$

Der Wert des Ausgabesignals kann insbesondere anhand der so definierten Zuordnung festgelegt werden. Die Zuordnung S nimmt den Wert "falsch" an, wenn die vorgebbare Schwelle $v_s$ innerhalb der vorgegebenen Zeitspanne $T_W$ vor dem betrachteten Zeitpunkt t zumindest kurzzeitig überschritten worden ist. Das bedeutet also, dass das Kraftfahrzeug beim Wert "falsch" als in Fahrt angenommen wird. Im Übrigen nimmt die Zuordnung S den Wert "wahr" an. In dem Fall kann das Kraftfahrzeug also als im Stillstand angenommen werden.

Für eine besonders einfache Implementierung der Zuordnung S wird das empfangene Geschwindigkeitssignal v(t') in einem Ringspeicher ("ring buffer") gespeichert, in welchen die empfangenen Signale an einer Seite eingelesen werden und von den Elementen mit der Zeit an der anderen Seite wieder entnommen werden. Um zu überprüfen, ob eines der im Ringspeicher gespeicherten Signale die vorgebbare Schwelle überschreitet, können alle im Ringspeicher gespeicherten Elemente, die zur vorgegebenen Zeitspanne gehören, überprüft werden. Der Ringspeicher kann dazu vorzugsweise mindestens $[T_W/T_{vMin}]$ Elemente speichern. Dabei gibt [$x$] den auf eine ganze Zahl gerundeten Wert von x an. $T_{vMin}$ ist die minimale Empfangszeitspanne. Diese liegt üblicherweise im Bereich von einer bis wenigen Sekunden. Entsprechend ist es bevorzugt, dass der Ringspeicher mehrere Hundert Signale speichern kann.

Sowohl die Speicherkapazität als auch die erforderliche Verarbeitungszeit können bei einer derartigen Implementierung nachteilig sein. Das ist insbesondere dann der Fall, wenn das Verfahren beispielsweise in einer pyrotechnischen Steuereinheit mit begrenzten Ressourcen implementiert werden soll. Weiterhin könnte ein Angreifer versuchen, den Ringspeicher mit einer großen Zahl von manipulierten Signalen zu überfluten.

Die beschriebenen Nachteile können in der im Folgenden beschriebenen bevorzugten Implementierung des beschriebenen Verfahrens vermieden werden, bei der ein Zeitstempel verwendet wird. Damit können die beschriebenen Nachteile eines Ringspeichers umgangen werden. Insbesondere ist keine besonders große Speicherkapazität und/oder keine besonders lange Verarbeitungszeit erforderlich. Um das zu erreichen, wird jeder Wert des Geschwindigkeitssignals von einer kontinuierlich arbeitenden Überwachungsfunktion überprüft. Der Zeitstempel wird gesetzt, wenn das aktuell empfangene Signal die vorgebbare Schwelle überschreitet. Dadurch gibt der Zeitstempel immer an, wann der letzte Zeitpunkt war, an dem die vorgebbare Schwelle überschritten worden ist. Somit kann S auch wie folgt definiert werden:

$$S(t) = \begin{cases} \text{falsch}; & t_e + T_W \geq t \\ \text{wahr}; & \text{sonst} \end{cases}$$

Der Wert des Ausgabesignals kann insbesondere anhand der so definierten Zuordnung festgelegt werden.

In einer weiteren bevorzugten Ausführungsform des Verfahrens werden die Verfahrensschritte a) bis d) in Reaktion auf eine Anforderung zum Deaktivieren des mindestens einen pyrotechnischen Elements durchgeführt.

Die Anforderung zum Deaktivieren des mindestens einen pyrotechnischen Elements kann insbesondere eine Anforderung zur "end-of-life-Auslösung" insbesondere der Airbags sein. Insbesondere kann die Anforderung von der Benutzerschnittstelle ausgegeben werden.

Beim Fahrzeugrecycling kann also beispielsweise ein Laptop als die Benutzerschnittstelle beispielsweise über einen Diagnosestecker an das Kraftfahrzeug angebunden werden und so die Anforderung zum Deaktivieren des mindestens einen pyrotechnischen Elements ausgegeben werden. Daraufhin wird gemäß dem beschriebenen Verfahren geprüft, ob sich das Kraftfahrzeug im Stillstand befindet und, sofern dies der Fall ist, werden die Airbags kontrolliert ausgelöst.

Insbesondere kann als Reaktion auf die Anforderung überprüft werden, ob die oben beschriebene Zuordnung S den Wert "wahr" oder "falsch" annimmt. Nur, wenn die Zuordnung S den Wert "wahr" annimmt, erfolgt die "end-of-life-Auslösung". So kann durch Vergleich des Zeitstempels mit der aktuellen Zeit t herausgefunden werden, ob das Kraftfahrzeug während der vorgegebenen Zeitspanne im Stillstand war oder nicht. Nur, wenn der Zeitstempel angibt, dass das Kraftfahrzeug im Stillstand ist, wird die "end-of-life-Auslösung" ausgelöst.

Als ein weiterer Aspekt wird ein Steuergerät vorgestellt, welches zur Durchführung des beschriebenen Verfahrens eingerichtet ist. Die weiter vorne für das Verfahren beschriebenen besonderen Vorteile und Ausgestaltungsmerkmale sind auf die Benutzerschnittstelle anwendbar und übertragbar. Das Steuergerät ist vorzugsweise von einem Signal-Bus des Kraftfahrzeug und insbesondere von einem Hauptsteuergerät zur Bereitstellung des in Schritt a) empfangenen Signals getrennt. Diese Trennung ist insbesondere so implementiert, dass eine Manipulation des Steuergerätes ausgehend von dem Hauptsteuergerät nicht möglich ist. Wenn ein Angreifer das Hauptsteuergerät manipuliert und verfälschte Signale in den Signal-Bus einspeisen kann, dann hat er nach wie vor keinen Zugriff aus das Steuergerät. Auf diese Art und Weise kann verhindert werden, dass eine Manipulation der Durchführung des beschriebenen Verfahrens in dem Steuergerät möglich ist. Vorzugsweise ist das Steuergerät so eingerichtet, dass nur das in Schritt a) empfangene Signal aus dem Hauptsteuergerät bzw. über den Signal-Bus von dem Steuergerät empfangen werden kann. So kann sichergestellt werden, dass eine Manipulation des Steuergeräts ausgehend von dem Hauptsteuergerät unmöglich bzw. zumindest erheblich erschwert ist.

Weiterhin wird ein Computerprogramm vorgestellt, welches eingerichtet ist, alle Schritte des beschriebenen Verfahrens auszuführen. Zudem wird ein maschinenlesbares Speichermedium vorgestellt, auf dem das beschriebene Computerprogramm gespeichert ist. Die weiter vorne für das Verfahren und die Benutzerschnittstelle beschriebenen besonderen Vorteile und Ausgestaltungsmerkmale sind auf das Computerprogramm und das maschinenlesbare Speichermedium anwendbar und übertragbar.

Weitere Einzelheiten der Erfindung und ein Ausführungsbeispiel, auf welches die Erfindung jedoch nicht beschränkt ist, werden anhand der Zeichnungen näher erläutert. Es zeigen schematisch:

Fig. 1: eine Darstellung eines Kraftfahrzeugs mit einer daran angeschlossenen Benutzerschnittstelle,

Fig. 2: eine erste Darstellung eines Verfahrens zum Ermitteln eines deaktivierten Betriebszustandes des Kraftfahrzeugs aus Fig. 1,

Fig. 3: eine zweite Darstellung eines Verfahrens zum Ermitteln eines deaktivierten Betriebszustandes des Kraftfahrzeugs aus Fig. 1,

Fig. 4: eine dritte Darstellung eines Verfahrens zum Ermitteln eines deaktivierten Betriebszustandes des Kraftfahrzeugs aus Fig. 1, und

Fig. 5: eine vierte Darstellung eines Verfahrens zum Ermitteln eines deaktivierten Betriebszustandes des Kraftfahrzeugs aus Fig. 1.

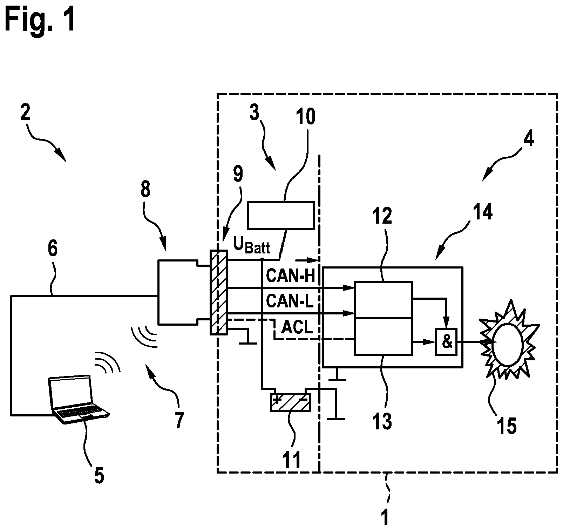

Fig. 1 zeigt ein Kraftfahrzeug 1, welches ein Netzwerk 3 sowie eine pyrotechnische Steuereinheit 4 umfasst. An das Netzwerk 3 ist eine Benutzeranordnung 2 angebunden, die eine Benutzerschnittstelle 5 sowie eine Kabelverbindung 6 und eine Schnittstelle 8 umfasst. Zwischen der Schnittstelle 8 und der Benutzerschnittstelle 5 ist zudem eine Funkverbindung 7 ausgebildet. Die Schnittstelle 8 ist über einen Diagnosestecker 9 mit dem Kraftfahrzeug 1 bzw. mit dessen Netzwerk 3 verbunden. Das Netzwerk 3 umfasst insbesondere eine Batterie 11 sowie ein Zündschloss 10.

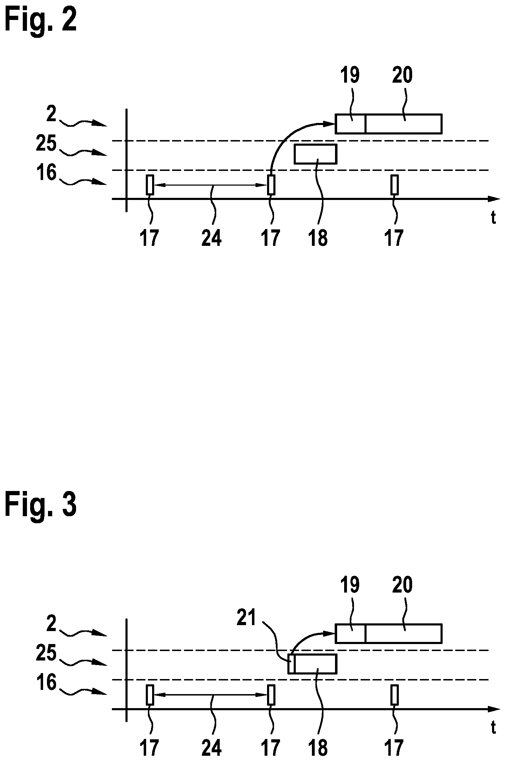

Die pyrotechnische Steuereinheit 4 umfasst insbesondere ein Airbagsteuergerät 14 mit einem Prozessor 12 und einem Sicherheitselement 13. Das Airbagsteuergerät 14 ist an ein pyrotechnisches Element 15, welches insbesondere ein Airbag sein kann, angebunden. Insbesondere mit dem Prozessor 12 und dem Sicherheitselement 13 kann das in den Fig. 2 bis 5 dargestellte Verfahren ausgeführt werden.

Fig. 2 zeigt eine erste Darstellung eines Verfahrens zum Ermitteln eines deaktivierten Betriebszustandes des Kraftfahrzeugs 1 aus Fig. 1. Dazu ist auf einer Rechtsachse die Zeit t gezeigt. Dagegen schematisch aufgetragen ist insbesondere ein Signal 16. Dabei kann es sich insbesondere um ein Geschwindigkeitssignal des Kraftfahrzeugs 1 handeln. Zu erkennen ist insbesondere, dass das Signal 16 zu diskreten Empfangszeitpunkten 17, die höchstens um eine maximale Empfangszeitspanne 24 auseinander liegen, vorliegt. Oberhalb des Signals 16 ist angedeutet, welche Signale ein Angreifer 25 in das Kraftfahrzeug 1 einleitet. Im hier gezeigten Beispiel leitet der Angreifer 25 zu einem bestimmten Zeitpunkt eine Anforderung 18 zum Auslösen des pyrotechnischen Elements 15 in das Kraftfahrzeug 1 ein. Darüber wiederum ist angedeutet, dass über die Benutzeranordnung 2 (und insbesondere über die Benutzerschnittstelle 5) eine Geschwindigkeitsüberprüfung 19 durchgeführt wird. Wird dabei ein Stillstand des Kraftfahrzeugs 1 erkannt, erfolgt ein Prozedurstart 20. Dabei kann es sich insbesondere um eine "end-of-life-Auslösung" des pyrotechnischen Elements 15 handeln. Der Eingriff durch den Angreifer 25 beläuft sich in diesem Beispiel auf das Einleiten der Anforderung 18. Ist das Kraftfahrzeug 1 in Fahrt, wird dies nicht zu einer Auslösung des pyrotechnischen Elements 15 führen.

Fig. 3 zeigt eine zweite Darstellung eines Verfahrens zum Ermitteln eines deaktivierten Betriebszustandes des Kraftfahrzeugs 1 aus Fig. 1. Im Unterschied zur Darstellung in Fig. 2 leitet der Angreifer 25 hier zusätzlich ein Fremdsignal 21 ein. Das Fremdsignal 21 ist ein Geschwindigkeitssignal, das die Geschwindigkeitsüberprüfung 19 verfälschen kann. Erfolgt die Geschwindigkeitsüberprüfung 19 in Abhängigkeit von nur einem Geschwindigkeitssignal, kann das eine Fremdsignal 21 ausreichen, das pyrotechnische Element 15 durch die vom Angreifer eingeleitete Anforderung 18 auszulösen.

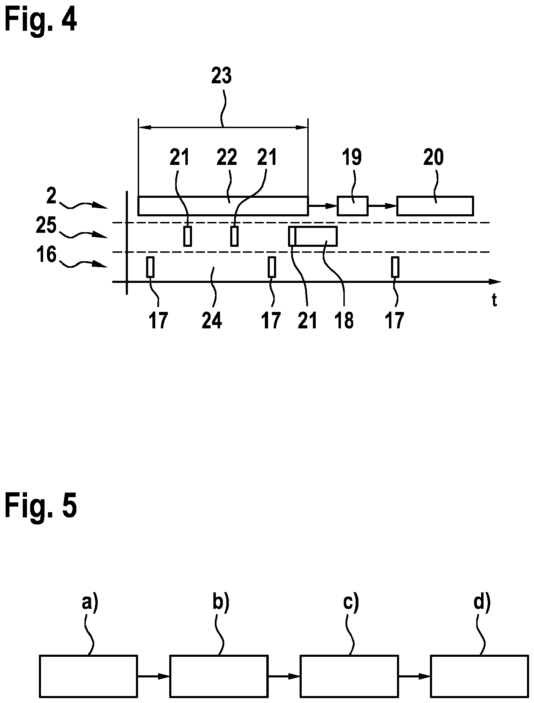

Fig. 4 zeigt eine dritte Darstellung eines Verfahrens zum Ermitteln eines deaktivierten Betriebszustandes des Kraftfahrzeugs 1 aus Fig. 1. Hier erfolgt die Geschwindigkeitsüberprüfung 19 in Abhängigkeit einer Geschwindigkeitsüberwachung 22. Die Geschwindigkeitsüberwachung 22 erfolgt über eine vorgegebene Zeitspanne 23. Wie gezeigt, müssen die Werte des Signals 16 zu allen Empfangszeitpunkten 17 innerhalb der vorgegebenen Zeitspanne 23 durch jeweilige Fremdsignale 21 manipuliert werden, damit bei der Geschwindigkeitsüberprüfung 19 ein falsches Ergebnis erhalten wird. Hier muss der Angreifer 25 also über die gesamte vorgegebene Zeitspanne 23 Fremdsignale 21 einleiten, damit die von ihm eingeleitete Anforderung 18 zu einer Auslösung des pyrotechnischen Elements 15 führt.

Fig. 5 zeigt eine vierte Darstellung eines Verfahrens zum Ermitteln eines deaktivierten Betriebszustandes des Kraftfahrzeugs 1 aus Fig. 1. Das Verfahren umfasst die folgenden Schritte:

a) Empfangen eines Signals 16, welches einen Betriebsparameter des Kraftfahrzeugs 1 umfasst,
b) Ermitteln eines Zeitpunktes, an dem der Betriebsparameter aus dem gemäß Schritt a) empfangenen Signal 16 zuletzt eine vorgebbare Schwelle überschritten hat,
c) Erkennen des deaktivierten Betriebszustandes in Abhängigkeit davon, ob der gemäß Schritt b) ermittelte Zeitpunkt um mehr als eine vorgegebene Zeitspanne 23 zurückliegt.

Das Verfahren ist weiterhin dazu eingerichtet, ein Ausgabesignal für ein Auslösesignal des pyrotechnischen Elements 15 des Kraftfahrzeugs 1 auszugeben, wobei das Ausgabesignal einen ersten Wert umfasst, wenn ein deaktivierter Betriebszustand erkannt wurde, wobei das Ausgabesignal im Übrigen einen zweiten Wert umfasst. Weiterhin umfasst das Verfahren demgemäß den Schritt:
d) Ausgeben des mindestens einen Auslösesignals für das entsprechende pyrotechnische Element 15 des Kraftfahrzeugs 1, wenn in Schritt c) ein deaktivierter Betriebszustand erkannt wurde.

**Patentansprüche**

1. Verfahren zum Ermitteln eines deaktivierten Betriebszustandes eines Kraftfahrzeugs (1), umfassend zumindest die folgenden Verfahrensschritte:

a) Empfangen mindestens eines Signals (16), welches einen Betriebsparameter des Kraftfahrzeugs (1) umfasst,
b) Ermitteln eines Zeitpunktes, an dem der Betriebsparameter aus dem gemäß Schritt a) empfangenen mindestens einen Signal (16) zuletzt eine vorgebbare Schwelle überschritten hat,
c) Erkennen des deaktivierten Betriebszustandes in Abhängigkeit davon, ob der gemäß Schritt b) ermittelte Zeitpunkt um mehr als eine vorgegebene Zeitspanne (23) zurückliegt;

wobei das Verfahren weiterhin dazu eingerichtet ist, ein Ausgabesignal für mindestens ein Auslösesignal eines pyrotechnischen Elements (15) des Kraftfahrzeugs (1) auszugeben, wobei das Ausgabesignal einen ersten Wert umfasst, wenn ein deaktivierter Betriebszustand erkannt wurde, wobei das Ausgabesignal im Übrigen einen zweiten Wert umfasst, und wobei das Verfahren weiterhin den folgenden Verfahrensschritt umfasst:
d) Ausgeben des mindestens einen Auslösesignals für das entsprechende pyrotechnische Element (15) des Kraftfahrzeugs (1), wenn in Schritt c) ein deaktivierter Betriebszustand erkannt wurde.

2. Verfahren nach Anspruch 1, wobei das mindestens eine Signal (16) in Schritt a) zu einer Vielzahl von diskreten Empfangszeitpunkten (17) empfangen wird, welche höchstens um eine maximale Empfangszeitspanne (24) auseinander liegen, und wobei die in Schritt c) verwendete vorgebbare Zeitspanne (23) zumindest größer als die maximale Empfangszeitspanne (24) ist.

3. Verfahren nach einem der vorhergehenden Ansprüche, wobei der Betriebsparameter eine Geschwindigkeit des Kraftfahrzeugs (1) ist.

4. Verfahren nach einem der vorhergehenden Ansprüche, wobei die Verfahrensschritte a) bis d) in Reaktion auf eine Anforderung (18) zum Deaktivieren des mindestens einen pyrotechnischen Elements (15) durchgeführt werden.

5. Steuergerät (5), welches zur Durchführung eines Verfahrens nach einem der vorhergehenden Ansprüche eingerichtet ist.

6. Computerprogramm, welches eingerichtet ist, alle Schritte des Verfahrens nach einem der Ansprüche 1 bis 4 auszuführen.

**7.** Maschinenlesbares Speichermedium, auf dem das Computerprogramm nach Anspruch 6 gespeichert ist.

**Claims**

**1.** Method for ascertaining a deactivated operating state of a motor vehicle (1), comprising at least the following method steps:

a) receiving at least one signal (16), which comprises an operating parameter of the motor vehicle (1),
b) ascertaining a time at which the operating parameter from the at least one signal (16) received in accordance with step a) last exceeded a predefinable threshold,
c) recognizing the deactivated operating state on the basis of whether more than a predefined time interval (23) has elapsed since the time ascertained in accordance with step b);

wherein the method is further designed to output an output signal for at least one trigger signal for a pyrotechnic element (15) of the motor vehicle (1), wherein the output signal comprises a first value if a deactivated operating state has been recognized, wherein the output signal additionally comprises a second value, and wherein the method further comprises the following method step:
d) outputting the at least one trigger signal for the applicable pyrotechnic element (15) of the motor vehicle (1) if a deactivated operating state has been recognized in step c).

**2.** Method according to Claim 1, wherein in step a), the at least one signal (16) is received at a plurality of discrete reception times (17), which are at most a maximum reception time interval (24) apart, and wherein the predefinable time interval (23) used in step c) is at least longer than the maximum reception time interval (24).

**3.** Method according to either of the preceding claims, wherein the operating parameter is a speed of the motor vehicle (1).

**4.** Method according to one of the preceding claims, wherein method steps a) to d) are carried out in response to a request (18) to deactivate the at least one pyrotechnic element (15).

**5.** Control device (5) designed to carry out a method according to one of the preceding claims.

**6.** Computer program designed to perform all of the steps of the method according to one of Claims 1 to 4.

**7.** Machine-readable storage medium on which the computer program according to Claim 6 is stored.

**Revendications**

**1.** Procédé permettant de déterminer un état de fonctionnement désactivé d'un véhicule automobile (1), comprenant au moins les étapes de procédé suivantes consistant à :

a) recevoir au moins un signal (16) qui comprend un paramètre de fonctionnement du véhicule automobile (1),
b) déterminer un moment où le paramètre de fonctionnement issu de l'au moins un signal (16) reçu selon l'étape a) a pour la dernière fois dépassé un seuil prédéfinissable,
c) reconnaître l'état de fonctionnement désactivé en fonction du fait que le moment déterminé selon l'étape b) est antérieur de plus d'un laps de temps prédéfini (23) ;

le procédé étant en outre aménagé pour sortir un signal de sortie pour au moins un signal de déclenchement d'un élément pyrotechnique (15) du véhicule automobile (1), le signal de sortie comprenant une première valeur si un état de fonctionnement désactivé a été reconnu, le signal de sortie comprenant par ailleurs une deuxième valeur, et le procédé comprenant en outre l'étape de procédé suivante consistant à :
d) sortir ledit au moins un signal de déclenchement pour l'élément pyrotechnique correspondant (15) du véhicule automobile (1) si un état de fonctionnement désactivé a été reconnu à l'étape c).

**2.** Procédé selon la revendication 1, dans lequel ledit au moins un signal (16) est reçu à l'étape a) à une pluralité de moments de réception (17) discrets qui sont séparés au plus d'un laps de temps de réception maximal (24), et dans lequel le laps de temps (23) prédéfinissable utilisé à l'étape c) est au moins supérieur au laps de temps de réception maximal (24).

**3.** Procédé selon l'une quelconque des revendications précédentes, dans lequel le paramètre de fonctionnement est une vitesse du véhicule automobile (1).

**4.** Procédé selon l'une quelconque des revendications précédentes, dans lequel les étapes de procédé a) à d) sont exécutées en réaction à une demande (18) de désactivation de l'au moins un élément pyrotechnique (15) .

**5.** Appareil de commande (5) qui est aménagé pour exécuter un procédé selon l'une quelconque des revendications précédentes.

**6.** Programme informatique qui est aménagé pour exécuter toutes les étapes du procédé selon l'une quelconque des revendications 1 à 4.

**7.** Support de stockage lisible par machine sur lequel est stocké le programme informatique selon la revendication 6.

# Fig. 1

# Fig. 2

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1274609 B1